Europäisches Patentamt

European Patent Office

Office européen des brevets

(19)

(11) Veröffentlichungsnummer: **0 266 713 B1**

# EUROPÄISCHE PATENTSCHRIFT

(45) Veröffentlichungstag der Patentschrift: **18.03.92**

(51) Int. Cl.⁵: **G01B 3/20**, G01B 5/14

(21) Anmeldenummer: **87116052.9**

(22) Anmeldetag: **31.10.87**

(54) **Vorrichtung zum Messen von Distanzen an einem Werkstück, und für das digitale Messen solcher Distanzen eingerichtete Schiebelehre.**

(30) Priorität: **03.11.86 CH 4350/86**

(43) Veröffentlichungstag der Anmeldung:
**11.05.88 Patentblatt 88/19**

(45) Bekanntmachung des Hinweises auf die Patenterteilung:
**18.03.92 Patentblatt 92/12**

(84) Benannte Vertragsstaaten:
**DE FR GB IT SE**

(56) Entgegenhaltungen:
**DE-U- 7 916 752**
**DE-U- 8 419 631**
**FR-A- 2 295 400**
**GB-A- 2 149 917**
**US-A- 2 824 375**

**TECHNICAL DIGEST. WESTERN ELECTRIC,
Nr. 71, Juli 1983, Seiten 5-6; New York, US;
E.E. CARRICO: "Multi-Function Digital Readout Caliper"**

(73) Patentinhaber: **INDUSTRIE-
HANDELS-AKTIENGESELLSCHAFT
Im Bretscha 4
FL-9494 Schaan(LI)**

(72) Erfinder: **Jost, Johann Michel
Bachtelstrasse 23
CH-8805 Richterswil(CH)**
Erfinder: **Walser, Carl S.
Salums 119
FL-9487 Gamprin(LI)**

(74) Vertreter: **Büchel, Kurt F., Dr.
Bergstrasse 297
FL-9495 Triesen(LI)**

## Beschreibung

Die Erfindung betrifft eine Vorrichtung nach dem Oberbegriff des Anspruches 1.

Eine solche Vorrichtung ist beispielsweise in der GB-A-2142144 beschrieben, die jedoch nur verhältnismässig ungenaue Messungen ermöglicht. Denn gerade bei flachen Werkstücken ist es möglich, dass das Werkstück beispielsweise eine zur Ebene der Schiene schiefe Lage einnimmt, weil die Ebene des Werkstückes nicht definiert ist. Eine genaue Bestimmung der Bezugspunkte erhält man nur dann, wenn zusätzlich das Werkstück kreisrund ist. Die Vermessung komplexerer Formen ist dagegen stets mit Ungenauigkeiten verbunden. Immerhin besass diese bekannte Konstruktion eine verschiebbare Skala, um den Nullpunkt für eine neue Messung jeweils in der gewünschten Weise einstellen zu können.

Andere übliche Schiebelehren, z. B. nach der FR-A-2295400, werden beispielsweise für das Bestimmen der Aussenmasse eines Blechzuschnittes, von Lochdurchmessern oder -abständen etc. in einem Winkel zur Achse oder Fläche des zu messenden Werkstückes angelegt. Nun kommt es aber bei komplexeren Formen oft vor, dass die am Werkstück ausgebildeten Anlegeflächen nicht durchgehend plan sind oder selbst einen Winkel mit der Achse oder Ebene des Werkstückes einschliessen, bzw. dass die Anlegepunkte nicht definiert sind, wenn es sich etwa um die Bestimmung des Normalabstandes eines Loches von einer Kante handelt. Ausserdem möchte man oft sehr verschieden grosse Distanzen mittels einer Schiebelehre mit langer Messschiene bestimmen. Misst man nun aber mit einer solchen Schiebelehre verhältnismässig kurze Distanzen, dann ist durch das Gewicht des überstehenden Teiles der Messschiene eine genaue Einstellung manuell schwierig.

Die Erfindung hat daher die Aufgabe, eine solche Messvorrichtung derart auszubilden, dass die Endpunkte der Messstrecke auch bei unregelmässig und/oder komplex aufgebauten Werkstücken Jeweils genau festlegbar sind, um so die Messgenauigkeit zu verbessern. Diese Aufgabe wird durch die Merkmale des Anspruches 1 gelöst. Vor allem ist dabei gesichert, dass das Werkstück am Pult jeweils in einer definierten Ebene liegt.

Eine weitere Aufgabe der Erfindung betrifft die Lösung des Problems, aus wenigstens zwei Messungen verschiedene Abstände von Flächen zu errechnen. Hiezu sind die Merkmale des Anspruches 2 vorgesehen. Zwar ist eine Schiebelehre mit digitaler Messeinrichtung und daran anschliessbarem Drucker sowie mit einer Null-Rückstelltaste bereits aus der US-A-4 612 636 bekannt geworden, doch fehlte ihr ein entsprechender Rechner, etwa um eine Lochmitte oder einen Abstand zu einer solchen zu errechnen.

Vorteilhafte Weiterbildungen der Erfindung sind in den anderen abnängigen Ansprüchen beschrieben.

Auf dem Pult kann ein Werkstück an die Seitenfläche der Messlatte angelegt werden, wodurch z.B. der Normalabstand eines im Werkstück senkrecht zur Pultfläche angebrachten Loches von der an die Seitenfläche der Messlatte angelegten Werkstückkante mittels einer Schiebelehre genau bestimmbar ist, die an der der genannten Seitenfläche der Messlatte gegenüberliegenden Seitenfläche so zur Anlage kommt, dass ihre Messschiene genau normal zur Seitenfläche der Messlatte ausgerichtet ist.

Die Vorteile der erfindungsgemäss vorgeschlagenen Massnahmen ergeben sich aus der nachfolgenden Beschreibung, in der die Erfindung anhand der Zeichnungen beispielhaft näher erläutert wird. Es zeigen:

| | |
|---|---|
| Fig. 1 | eine erfindungsgemässe Messvorrichtung im Schrägriss; |
| Fig. 2: | einen Längsschnitt durch die Messschiene einer anderen Ausführungsform der Erfindung; |
| Fig. 3: | einen Querschnitt durch den Abstandhalter entsprechend der Linie III-III der Fig. 2; |
| Fig. 4 und 5: | zwei verschiedene andere Ausführungsformen der erfindungsgemässen Schiebelehre im Schrägriss; |
| Fig. 6 bis 12: | verschiedene Ausführungsformen der für die erfindungsgemässe Schiebelehre zu verwendenden Messfin ger oder Rollen, im Schrägriss; und |
| Fig. 13: | ein Schema zur Erläuterung der Funktion einer bevorzugten Ausführung. |

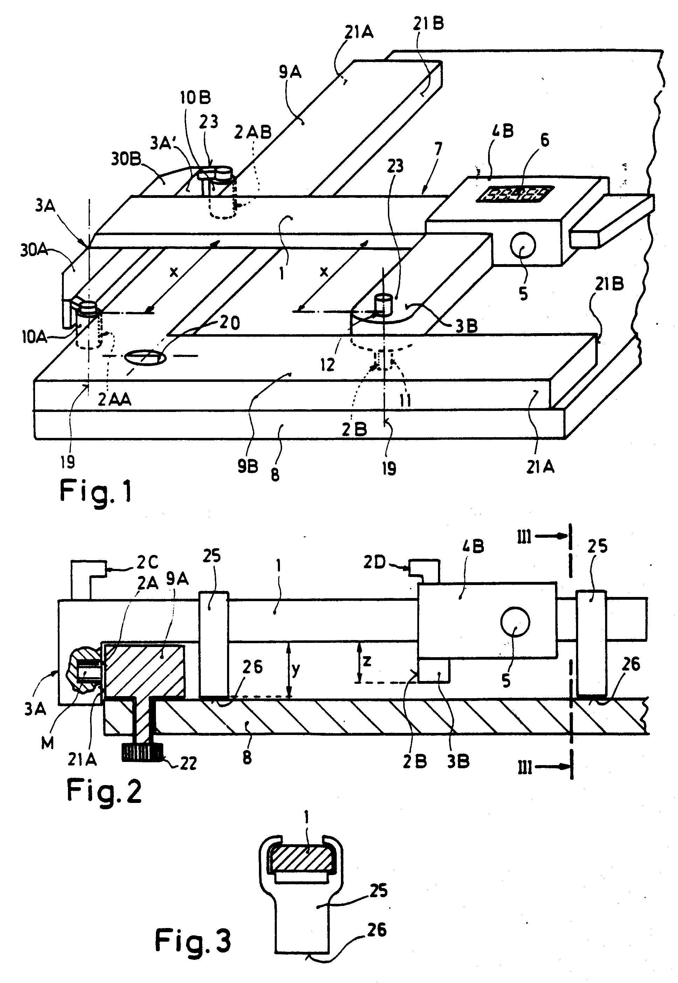

In Fig. 1 ist eine als Auflage bzw. Halterung für ein (nicht dargestelltes) Werkstück dienende rechteckige Platte, im folgenden als Pult 8 bezeichnet, z.B. auf einem (ebenfalls nicht dargestellten) Tisch oder Wagen, gegebenenfalls leicht lösbar, befestigt. Sie kann als Richtplatte, aber auch z.B. durchscheinend und daher von unten beleuchtbar ausgebildet sein. Entlang zwei aneinander stossender Randkanten des Pultes 8 sind auf einer seiner Seiten zwei Messlatten 9A,B befestigt. Die Befestigung kann fix oder aber lösbar, z.B. auch mittels Magnethaltekraft, ausgebildet sein. Die Seitenflächen 21A, B der Messlatten 9A,B sind genau planparallel zueinander ausgerichtet. Wenn in dieser Beschreibung der Ausdruck "genau" gebraucht wird, so ist darunter die für die jeweilige Messaufgabe erforderliche, bzw. gewünschte Genauigkeit, bzw. Messtoleranz zu verstehen, bzw. diejenige, die mit den verwendeten Vorrichtungen erzielbar ist.

Ueber der Messlatte 9A liegt die Messschiene 1 einer Schiebelehre 7, an deren - auf Fig. 1 bezogen - linkem Ende ein Messschenkel 3A mit seinen beiden über die Messschiene 1 hinausragenden Schenkelteilen 30A,B angeordnet ist. Die beiden Schenkelteile 30A,B tragen Rollen 10A,B, die zur Anlage an die äussere Seitenfläche 21A der Messlatten 9A,B bestimmt sind. Es versteht sich, dass anstelle der Rollen 10A,B auch die in Richtung zum Schenkel 3B weisende Fläche 3A' des Schenkels 3A als Messfläche ausgebildet und zur Anlage an die äussere Seitenfläche 21A der Messlatte 9A oder sogar an die Fläche, bzw. Kante eines zu messenden Werkstückes bestimmt sein kann.

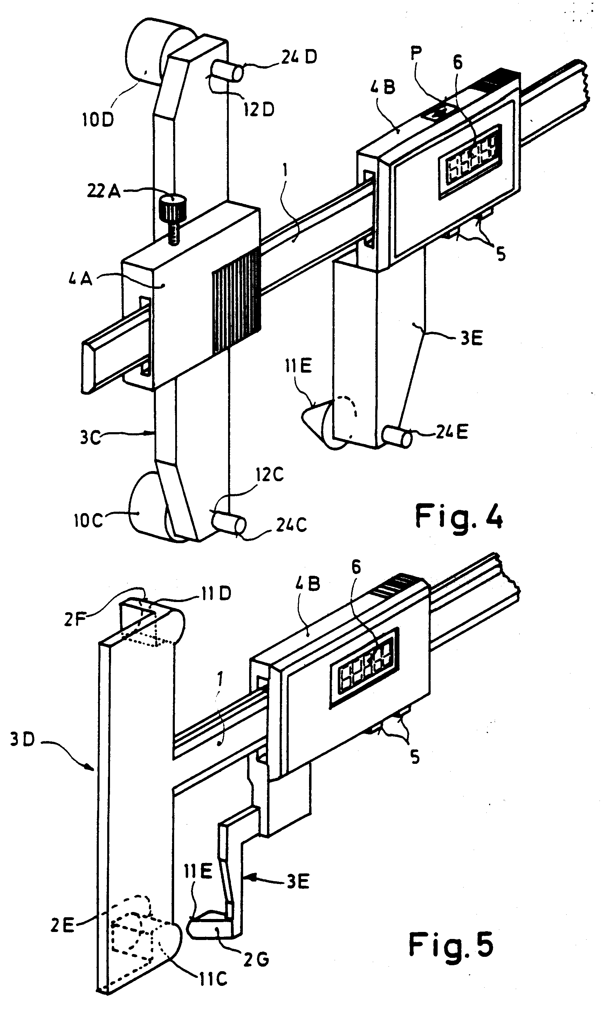

Bevorzugt ist aber die in Fig. 1 gezeigte Ausbildung mit Rollen 10A,B mit ihren als Messflächen 2AA,AB dienenden Zylindermantellinien (im Querschnitt punktförmig). Der Schenkel 3A kann fix auf der Messschiene angeordnet sein, während der Schenkel 3B verfahrbar ausgebildet ist. Bevorzugt ist jedoch auch der Schenkel 3C verfahrbar (Fig. 4); dies erleichtert das Messen kleiner Distanzen auch mittels einer Schiebelehre von grosser Messschienenlänge, da die Messschiene dann nicht einseitig überhängt, bzw. ausladet, wenn die Messung wenigstens annähernd in der Mitte der Messschiene vorgenommen werden kann. Aus diesem Grund ist die Schiebelehre auch für das digitale Messen eingerichtet, weil es bei solchen Messungen notwendig oder zumindest besonders zweckmässig ist, in jeder beliebigen Position des am Griffschlitten 4B befindlichen Messschenkels 3B die Messwertanzeige 6, z.B. mittels einer Justiereinrichtung 5, auf Null stellen zu können.

Die beiden Messflächen 2AA,AB - in Fig. 1 auch die sie tragenden Schenkelteile 30A,B - befinden sich ausserhalb (hier: unterhalb) der Ebene der Messschiene 1, im gezeigten Beispiel in der Ebene der Messlatte 9A, die auch die Ebene eines auf das Pult 8 zu legenden und an den inneren Seitenflächen 21B der Messlatten 9A,B zur Anlage kommenden Werkstücks, z.B. eines Blechzuschnittes ist. Hier besonders verbessert die erfindungsgemässe Ausbildung einer Messvorrichtung, die ein flaches Auflegen der Schiebelehre auf ein verhältnismässig grossflächiges Werkstück ermöglicht, die Genauigkeit und die Bequemlichkeit der Messung und der Ablesung der Messwerte ganz erheblich. Bisher war es immer erforderlich gewesen, Distanzmessungen an waagerecht angeordneten flachen Werstükken mit senkrecht oder in einem Winkel zu deren Fläche liegenden Messschenkeln auszuführen. Dies führte aber einerseits zu Ungenauigkeiten wegen nicht definierter Anlagepunkte und wegen der allfälligen Ungenauigkeiten einer Schnittkante im Verlaufe ihrer Länge, andererseits zu mühsamen Ablesungen in Blickrichtung parallel zur Fläche des Werkstückes.

Wie bereits erwähnt, ist auf der Messschiene 1 der Griffschlitten 4B verfahrbar, in dem sich auch die Einrichtung 6 zur digitalen Erfassung und Anzeige von Messwerten, sowie eine Nullpunkteinstellmöglichkeit in Form der Justiereinrichtung 5 befinden. Der Griffschlitten 4B trägt des weiteren den somit verfahrbaren Messschenkel 3B, in dem wenigstens ein Lager 12 zur Aufnahme eines Messfingers 11 ausgebildet ist.

Die Mittelachsen 19 der Rolle 10A und des Messfingers 11 befinden sich vorzugsweise im gleichgrossen Normalabstand X von der Messschiene 1. Dies ermöglicht es, die Schiebelehre 7 auch für herkömmliche Messungen von Distanzen zwischen den beiden Messflächen 2AA und 2B (letztere am Messfinger 11 ausgebildet und gegen die erstere gerichtet) zu benutzen.

Im Scheitel der beiden Messlatten 9A,B ist eine senkrecht zu deren Fläche gerichtete Bohrung angebracht, deren Achse sich in der Verlängerung der inneren Seitenfläche 21B der Messlatte 9A befindet. Dies ermöglicht eine Eichung, bzw. Justierung allenfalls verschiedener Rollen oder Messfingereinsätze für die anschliessende Messung von Lochabständen oder -distanzen in flachen Werkstücken. Die Vorgangsweise dabei wird später anhand der Beschreibung der Fig. 4 besser verständlich. Dort ist die Messfläche 2B an einem kegelförmigen Messfinger 11E ausgebildet. Wird nun der Kegel des Messfingers 11E so in die Bohrung 20 gesetzt, dass eine Umfangslinie des Kegelmantels zur Anlage an den oberen Rand der Bohrung 20 kommt, während die Rollen 10C,D des (übrigens dort verfahrbar ausgebildeten, aber mit Hilfe der Rändelschraube 22A fixierten) Messschenkels 3C an die äussere Seitenfläche 21A der Messlatte 9A (in Fig.4 nicht dargestellt) kommen, dann kann mit Hilfe der Justiereinrichtung 5 die Messwertanzeige 6 auf Null gestellt werden. Der Kegel des Messfingers 11E misst nun, in verschiedene Löcher eines mit einer Kante an die innere Seitenfläche 21B der Messlatte 9A gelegten Werkstückes gesetzt, den Normalabstand der jeweiligen Lochmitte von der angelegten Werkstückkante, bzw. von deren Hüllinie.

In den Fig. 2 und 3 ist eine andere Ausführungsform der Erfindung dargestellt. Auf dem Pult 8 ist eine Messlatte 9A mit Hilfe von durch das Pult 8 ragenden Rändelschrauben 22 befestigt. Ein am linken Ende der Messschiene 1 fix angeordneter Messschenkel 3A liegt mit seiner Messfläche 2A an der äusseren Seitenfläche 21A der Messlatte 9A; der dargestellte Lichtspalt dient nur dem besseren Verständnis. Auf der Messschiene sind zwei sie gabelförmig umgreifende Abstandhalter 25 verschiebbar angeordnet, deren untere Auflagefläche 26 auf der Oberfläche des Pultes 8 gleitet. Die Abstandhalter 25 bewirken, dass die Messschiene 1 in einem Abstand Y von der Oberfläche des Pultes 8 gehalten wird, der jedenfalls grösser ist als der Ueberstand Z des Griffschlittens 4B und/oder des Messschenkels 3B über die Messschiene 1 in Richtung auf die Oberfläche des Pultes 8. Dies erleichtert und verbessert die Genauigkeit der Messung auch kürzerer Distanzen mittels einer Schiebelehre mit langer Messschiene.

An den in Fig. 2 dargestellten Messschenkeln 3A,B befinden sich übrigens ausser den von der Messschiene 1 nach unten abragenden Messflächen 2A,B noch je eine nach oben abragende Messfläche 2C,D, mit deren Hilfe die Schiebelehre ebenfalls in herkömmlicher Weise verwendet werden kann, wenn z.B. gerade keine Rollen oder Messfinger als Einsätze in die Messschenkel vorhanden sind.

Wie ersichtlich, befindet sich innerhalb des Messschenkels 3A mindestens ein Bremsmagnet M. Dieser Magnet M wirkt mit der Messlatte 9A zusammen, die entweder zur Gänze aus magnetischem Material besteht oder doch wenigstens (beispielsweise bei Herstellung der Messlatte 9A aus Kunststoff) eine dem Mageneten M zugewandte Schiene aus magnetisierbarem Material trägt. Durch diesen Bremsmagneten M wird einerseits eine sichere Anlage des Messschenkels 3A an der Messlatte 9A gewährleistet, gleichzeitig aber der Schenkel 3A gegen ein unbeabsichtigtes Verschieben entlang der Latte 9A abgebremst, so dass die Genauigkeit der Messung verbessert wird. Trotzdem erlaubt dieser Magnet ein willkürliches Verschieben des Schenkels 3A entlang der Messlatte 9A. Selbstverständlich könnte die Anordnung auch umgekehrt sein, indem der Magnet M in der Messlatte 9A untergebracht ist, wie es ebenfalls denkbar wäre, jeweils schwache Magnete sowohl im Schenkel 3A, wie auch in der Messlatte 9A unterzubringen. Ebenso könnte der Magnet M durch andere Befestigungs-, bzw. lösbare Fixiereinrichtungen ersetzt werden, doch ist ersichtlich, dass ein Magnet die grössten Vorteile bietet. Ferner könnte eine ähnliche Fixiereinrichtung auch dazu benützt werden, die Messlatte 9A am Pult 8 zu fixieren, indem etwa ein Magnet in der Messlatte auch dem Pult 8 zugekehrt ist, gegebenenfalls so, dass er gleichzeitig zum Bremsen des Schenkels 3A dient. Auch können im Pult 8 Magnete zum Fixieren des Werkstückes vorgesehen sein .

Fig. 4 zeigt wiederum eine andere Ausführungsform der Erfindung. Hier ist auch der linke, normalerweise fixe Messschenkel 3C auf der Messschiene 1 verfahrbar ausgebildet und an einem darauf verfahrbaren, jedoch mittels der Rändelschraube 22A in beliebiger Position fixierbaren Griffschlitten 4A so befestigt, dass er in einer parallel zur Ebene der Messschiene 1 liegenden, aber im Abstand von dieser befindlichen Ebene liegt. Im Gegensatz zu Fig. 1, wo die Rollen 10A,B über einen Bügel 23 an den Schenkelteilen 30A,B gehalten sind, befinden sich die Lager 12C,D zur Aufnahme der Lagerzapfen 24C,D der beiden Rollen 10C,D direkt in den beiden Enden des Messschenkels 3C. In analoger Weise befindet sich der Messfinger 11E, der hier als Kegel ausgebildet ist, mit seinem Lagerzapfen 24E am Ende des Messschenkels 3E.

Eine einfachere Ausgestaltung der Erfindung ist anhand der Fig. 5 erläutert. Der fixe Messschenkel 3D liegt zwar in derselben Ebene wie die Messschiene 1, doch ragen die beiden Messfinger 11C,D von seinen Enden in den Bereich ausserhalb dieser Ebene und weisen an ihrer dem Messschienenende abgewandten Seite Messflächen 2E,F auf. Die Messfläche 2E wirkt dabei mit der Messfläche 2G des anderen Messschenkels 3E zusammen, der auf dem Griffschlitten 4B befestigt ist. Die beiden Messflächen 2E,G befinden sich aus den oberwähnten Gründen vorzugsweise im gleichen Normalabstand von der Messschiene 1.

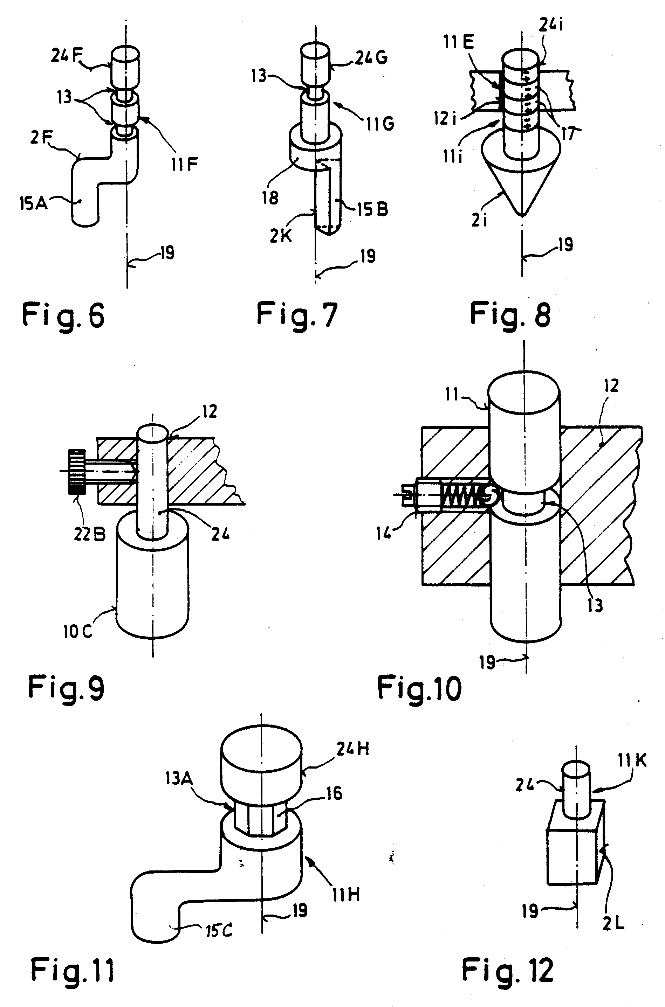

Der kurbelwellenartig gekröpfte Messfinger 11F in Fig. 6 trägt ein exzentrisches Messglied 15A mit einer Messfläche 2H, das es ermöglicht, die Messfläche (oder -linie) 2H in Anlage an beispielsweise die Messfläche 2AA (Fig. 1) der Rolle 10A zu bringen und die Vorrichtung in dieser Position zu justieren. In dem Lagerzapfen 24F des Messfingers 11F sind zwei Umfangsnuten 13 vorgesehen, mit denen eine Fixierung des Messfingers 11F in einem (hier nicht dargestellten) Lager ähnlich den Vorschlägen gemäss Fig. 9 oder 10 möglich ist.

Der Messfinger 11G nach Fig. 7 weist einen Lagerzapfen 24G mit nur einer Umfangsnut 13 auf, der über eine Scheibe 18 grösseren Durchmessers ein exzentrisches Messglied 15B in Form eines prismatischen Abschnittes trägt. Dieser besitzt eine Messlinie 2K, die mit der Achse 19 des Messfingers 11G zusammenfällt. Es ist ersichtlich, dass der Messfinger 11G durch Verdrehen um seine Achse 19 zur Anlage an Messpunkte von verschiedenen Richtungen her gebracht werden kann.

Die Ausbildung und Wirkungsweise der kegelmantelförmigen Messfläche 2i des Messfingers 11i gemäss Fig. 8 wurde bereits weiter oben beschrieben. Hier sei nur auf die Ausbildung des Lagerzapfens 24i hingewiesen, der aus mehreren Permanentmagnetscheibchen 17 besteht, die möglichst passgenau und mit geringer Reibung in einem Lager 12i (eines der hier nicht gezeigten Messschenkel 3) sitzen. Durch Daumendruck von oben kann der Kegel in ein Loch abgesenkt werden, dessen Abstand von einem anderen Loch oder einer Kante bestimmt werden soll; gegebenenfalls kann das Lager gegengleich magnetisch ausgebildet sein, um die Halterung zu verbessern und ein nur stufenweises Absenken zu ermöglichen.

In Fig. 9 ist eine Rolle 10C dargestellt, die mit ihrem Lagerzapfen 24 im Lager 12 sitzt. Eine das Lager 12 durchsetzende Rändelschraube 22B fixiert den Lagerzapfen 24 in beliebiger Höhe. Die Möglichkeit der Fixierung in einer bestimmten Höhe mit Hilfe eines in die Umfangsnut 13 eingreifenden, federbelasteten Kugelrasters 14 ist in Fig. 10 verdeutlicht. Diese Fixierung ist besonders für das leichte und problemlose Schnellwechseln verschiedener Messfinger von Vorteil.

Der Lagerzapfen 24H des Messfingers 11H gemäss Fig. 11 besitzt eine Umfangsnut 13A zum Zusammenwirken mit einer Fixierung ähnlich den Fig. 9 oder 10, wobei hier jedoch am Nutengrund abgeflachte Stellen 16 vorgesehen sind, die bei Verdrehen des Messfingers 11H um seine Achse 19 in an sich bekannter Weise ein Einrasten und damit Fixieren des exzentrischen Messgliedes 15C in verschiedenen Winkelpositionen ermöglichen.

Schliesslich zeigt Fig. 12 eine vereinfachte Ausführungsform eines Messfingers 11K mit einem Lagerzapfen 24 und an vier Seiten eines Quaders ausgebildeten Messflächen 2L.

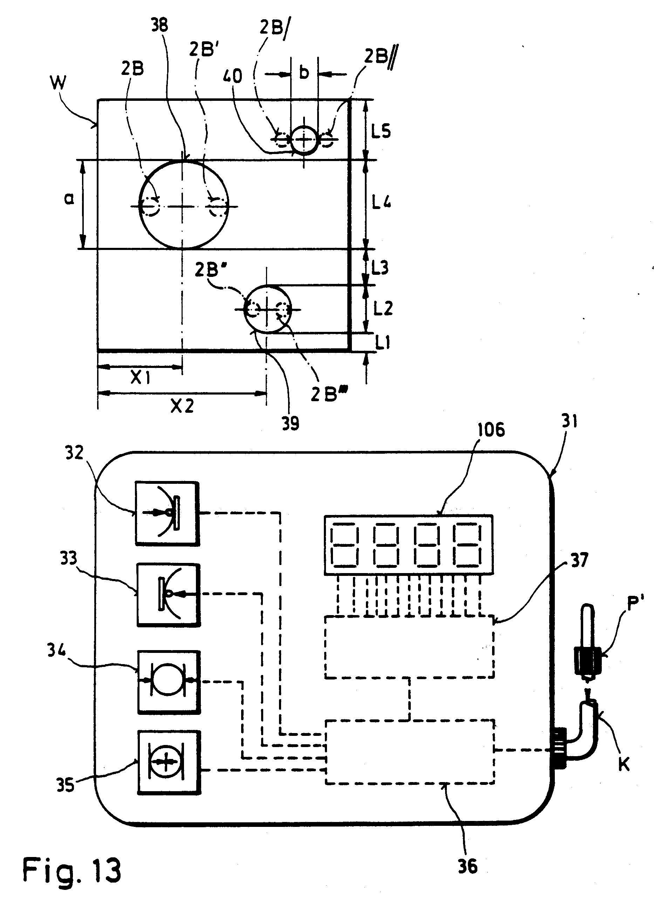

Nun sei noch an Hand der Fig. 13 die Funktion einer bevorzugten Ausführungsform erläutert. Hiezu ist vorzugsweise ein Zusatzgerät 31 vorgesehen, das mittels eines in eine Steckkupplung P (Fig. 4) einsteckbaren Steckkontaktes P′ (Fig. 13) an die Elektronik des Griffschlittens 4B angeschlossen wird. An sich könnte das Zusatzgerät 31 in den Griffschlitten integriert sein, in welchem Falle dann die Steckverbindung P,P′ natürlich wegfiele. Es ist aber zu bedenken, dass dadurch der Griffschlitten 4B etwas platzaufwendiger würde und ausserdem durch die Betätigung von am Zusatzgerät 31 angebrachten Tasten 32 bis 35 die Messgenauigkeit beeinträchtigt werden könnte.

Aus diesen Gründen ist es verständlich, wenn es bevorzugt ist, am Griffschlitten 4B eine elektrische Verbindungseinrichtung P vorzusehen, um ein gesondertes Zusatzgerät 31 anschliessen zu können, dem die digitalen Signale der im Griffschlitten 4B untergebrachten Längenmesseinrichtung über ein Kabel K zugeführt werden. Anderseits versteht es sich, dass gegebenenfalls der Griffschlitten 4B ohne das Display 6 ausgeführt werden kann, da ein ähnliches Display 106 am Zusatzgerät 31 vorgesehen ist.

Es sei nun angenommen, ein Werkstück W solle vermessen werden, das zwei Stanzlöcher 38,39 unterschiedlichen Durchmessers, sowie einen abstehenden Stift 40 aufweist. Liegt die linke Seitenkante des Werkstückes W an der Messlatte 9A (Fig. 1) an, so braucht die Messfläche 2B des aus Fig. 1 ersichtlichen Messfingers nur zunächst in die aus Fig. 13 ersichtliche Lage 2B an der linken Lochkante entlang dessen horizontaler Mittellinie gebracht zu werden. In dieser Stellung wird die Taste 33 des Gerätes 31 gedrückt, die ein entsprechendes Symbol trägt, worauf der jeweilige über das Kabel K eingegebene und vom Griffschlitten 4B an der Messschiene 1 abgenommene Längenwert im Speicher eines Mikroprozessors 36 gespeichert wird.

Anschliessend führt man die Messfläche 2B (Fig. 1) in die Stellung 2B′ (Fig. 13), wo sie am rechten Rand des Loches 38 angelegt wird. Der so bestimmte Längenwert wird im Gerät 31 durch Niederdrücken der Taste 32 gespeichert. Will man dann den Abstand X1 von der linken Seitenkante zur Mittellinie des Loches 38 erhalten, so wird die Resultattaste 35 betätigt, die einen Mittelwertbildner im Mikroprozessor 36 anwählt. Der Mittelwertbildner errechnet aus den beiden gespeicherten Werten für die Stellungen 2B und 2B′ den der Lage der Mittellinie des Loches 38 entsprechenden Wert und damit die Strecke X1.

Analog dazu ist vorzugehen, um die Strecke X2 von der linken Kante des Werkstückes W zur Mittellinie des Loches 39 auszumessen, wobei die Messfläche 2B erst in die Stellung 2B″ gebracht, die Taste 33 betätigt, die Messfläche in die Stellung 2B‴ verschoben und die Taste 32 gedrückt wird. Nach Betätigung der Taste 35 zeigt das Display 106 und/oder das Display 6 (Fig. 1,4) den errechneten Wert X2 an, indem der Mikroprozessor 36 eine Treiberstufe 37 für das Display 106 ansteuert. Es versteht sich dabei, dass bei Verwendung eines Gerätes gemäss Fig. 1 auch dieses mit einem Anschluss P (Fig. 4) versehen sein muss.

Man kann selbstverständlich auch den Durchmesser a des Loches 38 bestimmen, indem man an der senkrechten Mittellinie die Messfläche 2B einmal an der oberen Kante anlegt, die untere Kante des Werkstückes W dabei an der Messlatte 9A hält und die Taste 32 betätigt. Anschliessend wird die Messfläche 2B an die untere Kante des Loches 38 gelegt und die Taste 33 gedrückt. Durch Niederdrücken der Taste 34 wird der Durchmesser a angezeigt.

Will man dagegen einen Aussendurchmesser b des Stiftes 40 bestimmen, so wird die Messfläche 2B erst in die Stellung 2B/ gebracht, die Taste 32 betätigt und anschliessend, nach Vers eben der Messfläche in die Lage 2B// die Taste 33 gedrückt. Beim Betätigen der Resultattaste 34 erscheint dann der Durchmesser b, wobei die Ausbildung entweder so getroffen ist, dass das Resultat am Display 106 nur für die Dauer des Niederdrückens der Taste erscheint oder über einen Zeitgeber des Mikroprozessors für eine vorbestimmte Zeit am Display 106 sichtbar bleibt.

Es ist ferner auch möglich, nebeneinander liegende Längen L1 bis L5 laufend zu bestimmen, zu welchem Zwecke der Mikroprozessor 36 so ausgebildet ist, dass er in diese Betriebsart gelangt, wenn eine der Tasten 32 bzw. 33 während einer vorbestimmten Dauer, z.B. von 3 Sekunden, niedergedrückt gehalten wird. Die Bereitschaft des Mikroprozessors 36 für diese Betriebsart wird dann zweckmässig, beispielsweise durch rhytmisch in Zeitabständen erscheinende Zeichen oder auf andere Art, am Display 106 angezeigt. Hier kann sogar die Ausbildung so getroffen werden, dass jeweils die Länge L1,L2,L3 ...L5 erscheint, wenn nur die Messfläche 2B für eine gewisse Dauer ruhig an der jeweils zu messenden Kante gehalten wird.

Gerade die letztere Betriebsart zeigt, dass es nicht unbedingt der Tasten 32 und 33 bedarf, sondern es gegebenenfalls genügen mag, nach Einstellung einer Betriebsart oder überhaupt nach Einschalten des Mikroprozessors 36, die zu vermessenden Kanten mit der Messfläche zu berühren. Sei es, dass es genügt die Messfläche während einer bestimmten Dauer an der zu messenden Kante zu halten, oder dass die Messfläche bzw. der ganze Finger 11 gefedert gelagert ist und beim Anlegen an eine Kante selbst einen Schalter am Schenkel 3B betätigt, der der Taste 32 bzw. 33 entspricht. Allerdings besteht bei einer solchen Ausbildung der Messfläche 2B die Gefahr unwillkürlicher Betätigung des mit ihr verbundenen Schalters. Es versteht sich daher, dass die Anordnung der Tasten 32,33 günstiger ist.

Aus der obigen Beschreibung der Fig. 13 ergibt sich, dass selbstverständlich zahlreiche andere Arten von Messungen an Werkstücken möglich sind, wie etwa die Messung des Abstandes der vertikalen Mittellinien der Löcher 38 und 39 voneinander, indem die zuerst in der oben beschriebenen Weise bestimmte Mittellinie des Loches 38 als neuer Nullwert im Mikroprozessor 36 festgehalten wird. Beispielsweise mag die programmierte Betriebsweise dieses Mikroprozessors 36 es gestatten, die Längen X1 oder X2 unmittelbar nach dem Betätigen der jeweils als zweite gedrückten Taste 32 bzw. 33 vom Display 106 abzulesen, ohne dass erst die Taste 35 gedrückt werden muss. In diesem Falle kann die Taste 35 dazu benützt werden, beim Messen von Abständen zwischen zwei Mittellinien den neuen Nullpunkt festzulegen.

Eine andere Betriebsart könnte darin bestehen, die Abstände der jeweils rechten Kanten der Löcher 38,39 voneinander zu bestimmen. Hier kann man dadurch an Tasten am Gerät 31 einsparen, dass der Mikroprozessor auf das gleichzeitige Drücken zweier Tasten, etwa der Taste 33 und der Taste 34, die entsprechende Rechenoperation ausführt, obwohl beim zweimaligen Anlagen der Messfläche 2B an eine rechte (oder linke) Kante eines Werkstückes jedesmal die Taste 32 (oder 33) zu drücken ist.

Eine weitere Möglichkeit könnte darin bestehen, dass die Funktion der Tasten 32,33 in einer einzigen Eingabetaste vereinigt sind, indem der Rechner jeweils den ersten mit Hilfe dieser Taste eingespeicherten Wert zum jeweils zweiten solchen Wert in Beziehung bringt.

Die Erfindung ist nicht auf die dargestellten Beispiele beschränkt, sondern kann in vielfältiger Weise abgewandelt werden. So lässt sich z.B. die Bohrung 20 durch konzentrische Präzisionseinsätze für verschiedene Kegelmanteldurchmesser verkleinern; zur Messung abgewinkelter Blechteile kann zumindest ein Schenkelteil gegenüber der Messschiene abwinkelbar ausgebildet sein; es können exzentrische Messglieder mit verschiedener Ausladung und Länge, Rollen verschiedenen Durchmessers, Messfinger mit verschiedener Form und Grösse in Anpassung an die jeweils zu bewältigende Messaufgabe in einem Set von Einsätzen vorgesehen sein, wobei zweckmässig alle Lager 12 und Lagerzapfen 24 gleich und daher austauschbar ausgebildet sind; schliesslich können auch verschieden hohe, bzw. gegebenenfalls austauschbare Messlatten für das Vermessen verschieden hoher Werkstücke vorgesehen sein, wobei dann zweckmässig auch die Abstandhalter 25 der jeweiligen Höhe anzupassen sind; anstelle der Rändelschraube oder des Kugelrasters kann jede beliebige andere an sich bekannte Befestigungsmöglichkeit für die Höhe und/oder Drehposition des Messfingers verwendet werden.

**Patentansprüche**

1. Vorrichtung zum Messen von Distanzen an einem Werkstück, mit einer für das digitale Messen eingerichteten Schiebelehre, die eine sich in einer vorbestimmten Ebene erstreckende Messschiene (1), einen darauf verschiebbaren Griffschlitten (4B) mit einem senkrecht zur Messschiene (1) abstehenden Messschenkel (3B) und einen weiteren Messschenkel (3A), vorzugsweise mit zwei senkrecht abragenden, gegebenenfalls auswechselbaren, Messfingern, aufweist, welch ersterer Messschenkel (3B) einen senkrecht aus der Ebene der Messschiene (1) abragenden - gegebenenfalls auswechselbaren - am Werkstück zur Anlage kommenden Messfortsatz, -finger od.dgl. (11) aufweist, wobei wenigstens einer der Messschenkel (3) zwei in verschiedene Richtungen von der Messschiene (1) parallel zu deren Ebene abragende Schenkelteile (30) aufweist, dadurch gekennzeichnet, dass an jedem Messfinger (11) eine in Richtung auf das zu messende Werkstück ausrichtbare Messfläche (2B) zur Anlage an diesem ausgebildet ist, dass eine, insbesondere magnetische, Vorrichtung (M) zum lösbaren Fixieren der Schiebelehre (7) bzw. der Messflächen (2) an dem zu messenden Werkstück vorgesehen ist, und dass eine Halterung für das zu messende Werkstück vorgesehen ist, die aus mindestens einem Pult (8) mit zwei normal zueinander angeordneten oder in eine solche Anordnung bring- und fixierbaren Messlatten (9A, 9B) mit jeweils einer weiteren Anlagefläche (21B) für das Werkstück besteht, von welchen Anlageflächen eine der verschiebbaren Messfläche (2B) gegenüberliegt, wobei die Messschiene (1), der Messschenkel (3B) mit der verschiebbaren Meßfläche (2B) und die beiden Messlatten (9A, 9B) so ausgebildet sind und so angeordnet werden können, daß sie - in Draufsicht gesehen - das jeweils zu messende Werkstück rechteckförmig umfassen.

2. Vorrichtung nach Anspruch 1, dadurch gekennzeichnet, dass eine Schaltungsanordnung (32-36) mit einem Rechner (36) zum Ermitteln einer Distanz auf Grund zweier Positionen der Messfläche (2B) des verschiebbaren Messschenkels (3B) - gegebenenfalls mit einem Speicher vorgesehen ist, an den einerseits der wenigstens einen elektrischen Anschluss (P) zum Übertragen von Messignalen aufweisende Griffschlitten (4B) und anderseits wenigstens eine Eingabevorrichtung (32-35) zum Eingeben von vom Rechner (36) benötigten Informationen angeschlossen bzw. anschliessbar sind.

3. Vorrichtung nach Anspruch 1 oder 2, dadurch gekennzeichnet, dass beide Messschenkel (3) auf der Messschiene (1) verschiebbar sind und zumindest einer (3A) der beiden Messschenkel (3) fixierbar ist.

4. Vorrichtung nach einem der vorhergehenden Ansprüche, dadurch gekennzeichnet, dass wenigstens eine Messfläche (2AA, 2AB) an einer Rolle (10) ausgebildet ist.

5. Vorrichtung nach einem der vorhergehenden Ansprüche, dadurch gekennzeichnet, dass wenigstens eine der Messflächen (2A) des weiteren Messschenkels (3A) und die Messfläche (2B) des erstgenannten Messschenkels (3B) gleichen definierten Abstand (X) von der Messschiene (1) aufweisen.

6. Vorrichtung nach einem der vorhergehenden Ansprüche, dadurch gekennzeichnet, dass die Rollen (10) und/oder Messfinger (11) mittels eines Lagerzapfens (24) in je einem Lager (12) drehbar - und gegebenenfalls in ihrer Drehposition relativ zum Lager (12) fixierbar - gelagert sind.

7. Vorrichtung nach Anspruch 6, dadurch gekennzeichnet, dass an dem Lagerzapfen (24) eine - am Nutengrund vorzugsweise abgeflachte Stellen (16) aufweisende - Umfangsnut (13), beispielsweise für das Zusammenwirken mit zumindest einem das Lager (12) durchdringenden, federbelasteten Kugelraster (14), vorgesehen ist.

8. Vorrichtung nach einem der vorhergehenden Ansprüche, dadurch gekennzeichnet, dass der Messfinger (11A, B) zumindest ein exzentrisches Messglied (15) aufweist, das vorzugsweise kurbelwellenähnlich aus der Achse (19) des Messfingers (11F,G,H) versetzt ist.

9. Vorrichtung nach Anspruch 8, dadurch gekennzeichnet, dass das Messglied (15B) eine abgerundete Messfläche (2K) mit einem Radius von 0,001 bis 0,05 mm aufweist, die an einem - im Querschnitt vorzugsweise prismatischen - Abschnitt des Messfingers (11G) ausgebildet ist und sich gegebenenfalls entlang der Mittelachse (19) des Messfingers (11G) erstreckt.

10. Vorrichtung nach einem der Ansprüche 6 bis 9, dadurch gekennzeichnet, dass der Messfinger (11) gegenüber dem Lagerzapfen (24) verbreitert ausgebildet ist, wobei seine Messfläche (2) vorzugsweise auch das den Lagerzapfen (24) aufnehmende Lager (12) seitlich überragt.

11. Vorrichtung nach einem der vorhergehenden Ansprüche, dadurch gekennzeichnet, dass der Messfinger (11) in seiner Höhe - gemessen zur Ebene der Messschiene (1) - in einem Bereich von 1 bis 50 mm verstellbar bzw. verschiebbar - und vorzugsweise ganz entfernbar - ist.

12. Vorrichtung nach einem der Ansprüche 6 bis 11, dadurch gekennzeichnet, dass das Lager (12) und/oder der Messfinger (11) und/oder der Lagerzapfen (24) wenigstens teilweise magnetisch ausgebildet sind.

13. Vorrichtung nach einem der vorhergehenden Ansprüche, dadurch gekennzeichnet, dass die Messschenkel (3) weitere einander gegenüberliegende Messflächen (2C,D) aufweisen, die auf der den ersten Messflächen (2A,B) entgegengesetzten Seite der Messschiene (1) ausserhalb oder innerhalb der Ebene der Messschiene (1) liegen.

14. Vorrichtung nach einem der Ansprüche 2 bis 13, dadurch gekennzeichnet, dass der Rechner (36) einen Mittelwertbildner aufweist, der vorzugsweise durch eine ihn anwählende Taste (35) anschaltbar ist.

15. Vorrichtung nach einem der Ansprüche 2 bis 14, dadurch gekennzeichnet, dass die Eingabevorrichtung (32-35) zumindest eine Eingabetaste (32 bzw. 33) zum Abspeichern des jeweils eingestellten Längenmesswertes aufweist, vorzugsweise je eine Eingabetaste (32 bzw. 33) für die jeweiligen Endpunkte einer auszumessenden Messstrecke.

16. Vorrichtung nach einem der vorhergehenden Ansprüche, dadurch gekennzeichnet, dass der Messfinger (11E,K) im Bereiche seiner Messfläche (2i) kegelförmig ausgebildet ist und in der Messlatte (9) oder im Pult (8) eine Bohrung (20) für das Zusammenwirken mit der kegelförmigen Messfläche (2i) vorgesehen ist, wobei der Mittelpunkt der Bohrung (20) in derselben Ebene liegt, die durch die innere Seitenfläche (21B) einer der Messlatten (9) definiert ist.

17. Vorrichtung nach einem der vorhergehenden Ansprüche, dadurch gekennzeichnet, dass - vorzugsweise klemmbare - Abstandhalter (25) zwischen der Messschiene (1) und dem Pult (8) bzw. dem zu messenden Werkstück plazierbar sind, die einen Abstand (Y) halten, der grösser ist als der Überstand (Z) des Griffschlittens (4) und/oder Messfingers (11) über die Messchiene (11) in Richtung auf das Pult (8) bzw. das zu messende Werkstück.

## Claims

1. Apparatus for measuring distances on a workpiece, having a vernier calliper gauge which is designed for digital measurement and has a measuring rail (1) extending in a predetermined plane, a grip slide (4B) which can be moved thereon and has a measuring limb (3B) projecting at right angles to the measuring rail (1), and a further measuring rail (3A), preferably having two optionally replaceable measuring fingers projecting at right angles, which first measuring limb (3B) has a measuring extension, measuring finger or the like (11) which projects at right angles from the plane of the measuring rail (1), is optionally replaceable and comes to rest on the workpiece, at least one of the measuring limbs (3) having two limb parts (30) projecting in different directions from the measuring rail (1) parallel to the plane thereof, characterised in that a measuring surface (2B) which can be aligned with the workpiece to be measured is formed on each measuring finger (11) for contact with said workpiece, that an apparatus (M), in particular a magnetic one, for detachable fixing of the vernier calliper gauge (7) or of the measuring surface (2) to the workpiece to be measured is provided, and that a holder for the workpiece to be measured is provided, which holder consists of at least one desk (8) having two measuring rods (9A, 9B) which are arranged at right angles to one another or can be brought and fixed in such an arrangement and each having a further contact surface (21B) for the workpiece, one of which contact surfaces is opposite the movable measuring surface (2B), where the measuring rail (1), the measuring limb (3B) having the movable measuring surface (2B) and the two measuring rods (9A, 9B) can be formed and arranged in such a way that - in plan view - they enclose in a rectangle the particular workpiece to be measured.

2. Apparatus according to Claim 1, characterised in that a circuit arrangement (32-36) is provided with a computer (36) for determining a distance on the basis of two positions of the measuring surface (2B) of the movable measuring limb (3B), optionally with a memory, to which computer on the one hand the one or more electrical connections (P) for transmission of measuring signals from the grip slide (4B) and on the other hand the one or more input apparatuses (32-35) for inputting information required by the computer (36) are connected or can be connected.

3. Apparatus according to Claim 1 or 2, characterised in that both measuring limbs (3) can be moved on the measuring rail (1) and at least one (3A) of the two measuring limbs (3) can be fixed.

4. Apparatus according to any of the preceding Claims, characterised in that at least one measuring surface (2AA, 2AB) is formed on a roller (10).

5. Apparatus according to any of the preceding Claims, characterised in that at least one of the measuring surfaces (2A) of the further measuring limb (3A) and the measuring surface (2B) of the first mentioned measuring limb (3B) are the same defined distance (X) from the measuring rail (1).

6. Apparatus according to any of the preceding Claims, characterised in that the rollers (10) and/or measuring fingers (11) are each rotatably mounted by means of a bearing journal (24) in a bearing (12) -and optionally can be fixed in their rotary position relative to the bearing (12).

7. Apparatus according to Claim 6, characterised in that a circumferential groove (13) having areas (16) preferably flattened at the groove bottom, for example for cooperating with at least one spring-loaded ball catch (14) penetrating the bearing (12), is provided on the bearing journal (24).

8. Apparatus according to any of the preceding Claims, characterised in that the measuring finger (11A, B) has at least one eccentric measuring member (15) which is preferably offset from the axis (19) of the measuring finger (11F, G, H) in a manner similar to a crankshaft.

9. Apparatus according to Claim 8, characterised in that the measuring finger (16B) has a rounded measuring surface (2K) with a radius of 0.001 to 0.05 mm, which surface is formed on a section - preferably having a prismatic cross-section - of the measuring finger (11G) and optionally extends along the central axis (19) of the measuring finger (11G).

10. Apparatus according to any of Claims 6 to 9, characterised in that the measuring finger (11) is broader than the bearing journal (24), is a measuring surface (2) preferably also projecting laterally beyond the bearing (12) receiving the bearing journal (24).

11. Apparatus according to any of the preceding Claims, characterised in that the measuring finger (11) is adjustable or movable in its height - measured with respect to the plane of the measuring rail (1) - in a range from 1 to 50 mm - and can preferably be removed entirely.

12. Apparatus according to any of Claims 6 to 11, characterised in that the bearing (12) and/or the measuring finger (11) and/or the bearing journal (24) are at least partly magnetic.

13. Apparatus according to any of the preceding Claims, characterised in that the measuring limbs (3) have further measuring surfaces (2C, D) which face one another and are located on that side of the measuring rail (1) which is opposite the first measuring surfaces (2A, B), outside or inside the plane of the measuring rail (1).

14. Apparatus according to any of Claims 2 to 13, characterised in that the computer (36) has a mean value calculator which can preferably be switched on by a key 35 which selects it.

15. Apparatus according to any of Claims 2 to 14, characterised in that the input apparatus (32-35) has at least one input key (32 or 33) for storing the length measurements set in each case, preferably an input key (32 or 33) for each of the particular end points of a distance to be measured.

16. Apparatus according to any of the preceding Claims, characterised in that the measuring finger (11E, K) is conical in the region of its measuring surface (2i), and a hole (20) for cooperation with the conical measuring surface (2i) is provided in the measuring rod (9) or in the desk (8), the mid-point of the hole (20) being in the plane defined by the inner lateral surface (21B) of one of the measuring rods (9).

17. Apparatus according to any of the preceding Claims, characterised in that - preferably clampable - spacers (25) can be positioned between the measuring rail (1) and the desk (8) or the workpiece to be measured and maintain a distance (Y) which is greater than the projecting distance (Z) of the grip slide (4) and/or measuring finger (11) beyond the measuring rail (1) towards the desk (8) or the workpiece to be measured.

**Revendications**

1. Dispositif pour mesurer des distances sur une pièce, comprenant un pied à coulisse agencé pour la mesure numérique et comportant une réglette de mesure (1) qui s'étend dans un plan prédéterminé, un curseur (4B) qui peut coulisser sur celle-ci et qui est muni d'un bec de mesure (3B) en saillie perpendiculairement à la réglette de mesure (1), et un autre bec de mesure (3A) qui est muni de préférence de deux touches de mesure en saillie perpendiculairement et le cas échéant interchangeables, le premier bec de mesure (3B) présentant un prolongement ou une touche de mesure ou similaire (11) qui fait saillie perpendiculairement depuis le plan de la réglette de mesure (1), qui est interchangeable le cas échéant et qui vient porter contre la pièce, cependant que l'un au moins des becs de mesure (3) comporte deux parties de bec (30) qui font saillie dans deux directions différentes depuis la réglette de mesure (1), parallèlement au plan de celle-ci caractérisé par le fait qu'est réalisée sur chaque touche de mesure (11) une surface de mesure (2B) qui peut être dirigée dans la direction de la pièce à mesurer pour qu'elle porte sur celle-ci par le fait qu'il est prévu un dispositif (M), en particulier magnétique, pour la fixation amovible du pied à coulisse (7) ou des surfaces de mesure (2), respectivement, sur la pièce à mesurer, et par le fait qu'il est prévu un support pour la pièce à mesurer, lequel se compose d'au moins une table (8) munie de deux règles de mesure (9A, 9B) qui sont disposées perpendiculairement l'une par rapport à l'autre, ou qui peuvent être amenées et fixées dans une telle disposition et qui comprennent chacune une autre surface d'appui (21B) pour la pièce, l'une de ces surfaces d'appui étant opposée à la surface de mesure (2B) qui peut être déplacée, cependant que la réglette de mesure (1), le bec de mesure (3B) muni de la surface de mesure qui peut être déplacée (2B) et les deux règles de mesure (9A, 9B) sont réalisés et peuvent être disposés de telle manière que - vus en vue de dessus -, ils entourent à chaque fois la pièce à mesurer en formant un rectangle.

2. Dispositif selon la revendication 1, caractérisé par le fait qu'il est prévu un dispositif à circuits (32-36) muni d'un calculateur (36) qui est destiné à déterminer une distance sur la base de deux positions de la surface de mesure (2B) du bec de mesure (3B) qui peut être déplacé - le cas échéant avec une mémoire - et auquel sont raccordés ou peuvent être raccordés, respectivement, le curseur (4B) qui comporte au moins une connexion électrique (P) pour transmettre des signaux de mesure d'une part, et, d'autre part, au moins un dispositif d'entrée (32-35) destiné à introduire des informations dont le calculateur (36) a besoin.

3. Dispositif selon la revendication 1 ou 2, caractérisé par le fait que les deux becs de mesure (3) peuvent être déplacés sur la réglette de mesure (1), et qu'au moins l'un (3A) des deux becs de mesure (3) peut être fixé.

4. Dispositif selon l'une des revendications précédentes, caractérisé par le fait qu'au moins une surface de mesure (2AA, 2AB) est réalisée sur un galet (10).

5. Dispositif selon l'une des revendications précédentes, caractérisé par le fait qu'au moins l'une des surfaces de mesure (2A) de l'autre bec de mesure (3A) et la surface de mesure (2B) du bec de mesure cité en premier (3B) présentent la même distance définie (X) par rapport à la réglette de mesure (1).

6. Dispositif selon l'une des revendications précédentes, caractérisé par le fait que les galets (10) et/ou les touches de mesure (11) sont à chaque fois montés tournants dans un palier (12) au moyen d'un pivot (24), et qu'ils peuvent être fixés le cas échéant dans leur position en rotation par rapport au palier (12).

7. Dispositif selon la revendication 6, caractérisé par le fait qu'il est prévu sur le pivot (24) une rainure annulaire (13) - présentant de préférence sur le fond de la rainure des endroits aplatis (16) - pour coopérer par exemple avec au moins un encliquetage à bille (14) qui traverse le palier (12) et qui est actionné par un ressort.

8. Dispositif selon l'une des revendications précédentes, caractérisé par le fait que la touche de mesure (11A, B) comporte au moins un organe de mesure excentrique (15) qui est décalé par rapport à l'axe (19) de la touche de mesure (11F, G, H), de préférence à la manière d'une manivelle.

9. Dispositif selon la revendication 8, caractérisé par le fait que l'organe de mesure (15B) présente une surface de mesure arrondie (2K) dont le rayon est de 0,001 à 0,05 mm, qui est réalisée sur une portion de la touche de mesure (11G) - de préférence prismatique en section transversale - et qui s'étend, le cas échéant, le long de l'axe (19) de la touche de mesure (11G).

10. Dispositif selon l'une des revendications 6 à 9, caractérisé par le fait que la touche de mesure (11) est réalisée en étant élargie par rapport au pivot (24), cependant que, de préférence, sa surface de mesure (2) dépasse aussi latéralement le palier (12) qui reçoit le pivot (24).

11. Dispositif selon l'une des revendications précédentes, caractérisé par le fait que la touche de mesure (11) peut être réglée ou déplacée, respectivement, dans le sens de sa hauteur - mesurée par rapport au plan de la réglette de mesure (1) - dans une zone de 1 à 50 mm, et que, de préférence, elle peut être complètement enlevée.

12. Dispositif selon l'une des revendications 6 à 11, caractérisé par le fait que le palier (12) et/ou la touche de mesure (11) et/ou le pivot (24) sont réalisés magnétiquement, du moins en partie.

13. Dispositif selon l'une des revendications précédentes, caractérisé par le fait que les becs de mesure (3) comportent d'autres surfaces de mesure (2C, D) qui sont opposées les unes aux autres et qui sont situées à l'extérieur ou à l'intérieur du plan de la réglette de mesure (1) sur le côté de la réglette de mesure (1) qui est opposé aux premières surfaces de mesure (2A, B).

14. Dispositif selon l'une des revendications 2 à 13, caractérisé par le fait que le calculateur (36) comporte un dispositif de formation de valeurs moyennes, lequel, de préférence, peut être connecté par une touche (35) qui le sélectionne.

15. Dispositif selon l'une des revendication 2 à 14, caractérisé par le fait que le dispositif d'entrée (32-35) comporte au moins une touche d'entrée (32 ou 33, respectivement) destinée à mettre en mémoire la valeur mesurée de la longueur qui a été réglée à chaque fois, et, de préférence, une touche d'entrée à chaque fois (32 ou 33, respectivement) pour les points extrêmes correspondants d'une distance à mesurer.

16. Dispositif selon l'une des revendications précédentes, caractérisé par le fait que la touche de mesure (11E, K) est réalisée en forme de cône dans la région de sa surface de mesure (2i), et qu'il est prévu dans la règle de mesure (9) ou dans la table (8), un perçage (20) destiné à coopérer avec la surface de mesure en forme de cône (2i), le centre du perçage (20) étant situé dans le même plan que celui défini par la surface latérale intérieure (21B) de l'une dos règles de mesure (9).

17. Dispositif selon l'une des revendications précédentes, caractérisé par le fait que l'on peut placer entre la réglette de mesure (1) et la table (8) ou la pièce à mesurer, respectivement, des entretoises (25) qui peuvent être bloquées, de préférence, et qui maintiennent une distance (Y) supérieure au dépassement (Z) du curseur (4B) et/ou de la touche de mesure (11) au-delà de la réglette de mesure (1) dans la direction de la table (8) ou de la pièce à mesurer, respectivement.

Fig.1

Fig.2

Fig.3

Fig.4

Fig.5

Fig.6

Fig.7

Fig.8

Fig.9

Fig.10

Fig.11

Fig.12

Fig. 13